# EUROPEAN PATENT APPLICATION

(11) **EP 4 520 645 A1**
(43) Date of publication of application: **12.03.2025**
(21) Application number: 23306495.5
(22) Date of filing: 08.09.2023
(51) Int. Cl.: B63B 35/44, B63B 1/10, B63B 1/04, B63B 73/40

(54) **FLOATING OFFSHORE PLATFORM COMPRISING HOLLOW STRUCTURAL ELEMENTS CONNECTED TOGETHER, ELECTRICITY PRODUCING ASSEMBLY COMPRISING SUCH A PLATFORM, AND CORRESPONDING MANUFACTURING METHOD**

(71) Applicant: TOTALENERGIES ONETECH, 92400 Courbevoie (FR); Techlam, 68700 Cernay (FR)
(72) Inventor: GUY, Michel, 68700 CERNAY (FR); SKRABER, Alain, 68700 CERNAY (FR); AUBERT, Jean-Michel, 92400 COURBEVOIE (FR); DENEUVILLE, Loic, 92400 COURBEVOIE (FR)
(74) Representative: Lavoix

(57) **Abstract**

A floating offshore platform comprising a first hollow structural element (24), a second hollow structural element (26), and a mechanical connection (28), altogether defining an interior volume (40) and an exterior volume (42), the connection comprising:
- a first flange (52) defining a first axis (X1) and a first bearing surface (S1), the first bearing surface being spherical and concave,
- a second flange (54) defining a second axis (X2) and a second bearing surface (S2), the second axis being intended to be aligned or offset with respect the first axis as a result of manufacturing and/or assembling tolerances,
- a fastening system (56) comprising bolts (58),
- a sealing system (60) for sealing the interior volume (40), the sealing system extending between the first flange and the second flange and surrounding the first axis.

## Description

The present invention deals with a floating offshore platform comprising:
- a first hollow structural element, and a second hollow structural element, and
- a mechanical connection adapted for connecting the first structural element and the second structural element together,
the first structural element, the second structural element and the connection defining an interior volume and an exterior volume, and the connection comprising a sealing system adapted for sealing the interior volume.

The invention also deals with an assembly for producing electricity comprising such a platform and a wind turbine.

The invention also deals with a process of manufacturing such a platform or such an assembly.

Floating marine platforms or structures intended to support offshore wind turbines or other large pieces of equipment are complex structures, with various shapes, usually deployed in large numbers on a field of operation.

Usually, elements of these structures, such as floats, are manufactured in advance in suitable factories, brought to a location, such as a port or a shipyard, close to the future wind farm, for assembling, and then carried to the operation field. Conventional solutions for assembling include welding or bolting the structural elements.

In the first case (welding), the speed of execution is limited by parameters inherent to welding and by the availability of specialized human resources in sufficient number. As a consequence, assembling is relatively slow. This slows down the whole process of installing the platforms in the operation field, keeping in mind that installation often requires waiting for a favorable weather window. This negatively impacts the investment costs.

In the second case (bolting), existing tools can achieve a good assembling speed. However, it is also necessary to guarantee the perfection of the tightness of the assembled elements, in particular of those intended to participate in the buoyancy and/or the structural integrity of the platform over its entire lifespan, usually several decades.

Furthermore, some platform designs involve the presence of pressurized ballasts, and require an opening between the various structural elements to allow fluid movement in the interior volume. Also, the connection between structural elements is intended to pass huge mechanical efforts.

In practice, tightness of bolted solutions cannot be guaranteed. With a typical length greater than 20 meters and a typical diameter greater than 2 meters, the large size of the structural elements and their manufacturing tolerances induce clearances of several millimeters, if not centimeters, which cannot be sealed when using conventional bolted solutions. Tightness cannot be guaranteed over the expected lifespan of the platform, particularly when the structural elements define an interior volume and in the context of huge mechanical efforts between them.

An aim of the invention is thus to provide an offshore floating platform ensuring tightness between the assembled structural elements defining an interior volume, and allowing to reduce the investment costs.

To this end, the invention proposes a floating offshore platform comprising:
- a first hollow structural element, and a second hollow structural element, and
- a mechanical connection adapted for connecting the first structural element and the second structural element together,

the first structural element, the second structural element and the connection defining an interior volume and an exterior volume, and the connection comprising:
   - a first flange fixed to the first structural element and defining a first axis and a first bearing surface,
   - a second flange fixed to the second structural element and defining a second axis and a second bearing surface,
   - a fastening system adapted for fastening the second flange to the first flange, the fastening system comprising a plurality of bolts adapted for pressing the first bearing surface and the second bearing surface against each other, the second axis being intended to be aligned with the first axis, or offset with respect the first axis as a result of manufacturing and/or assembling tolerances, and
   - a sealing system adapted for sealing the interior volume, the sealing system extending between the first flange and the second flange and surrounding the first axis, the sealing system being in contact with the first bearing surface or the second bearing surface,
wherein the first bearing surface is spherical and concave, the first bearing surface defining a first bearing surface radius.

In other embodiments, the platform comprises one or several of the following features, taken in isolation or any technically feasible combination:
the second bearing surface is spherical and convex, the second bearing surface defining a second bearing surface radius which is:
   - equal to the first bearing surface radius, or
   - larger than the first bearing surface radius;
the fastening system extends in the interior volume;
the sealing system comprises:
   - a flat seal extending in a groove defined by the first flange or the second flange,
   - one or a several gadroon(s) defined by the first flange or the second flange, and protruding axially from the first bearing surface or from the second bearing surface, or
   - one or several O-ring(s) extending respectively in one or several groove(s) defined by the first flange or the second flange;
   - the sealing system comprises a first sealing member and a second sealing member, both surrounding the first axis, the second sealing member extending farther away from the first axis than the first sealing member,
   - the first flange, the second flange, the first sealing member and the second sealing member define an intermediate volume, and
   - the first flange or the second flange defines a test port from the interior volume or the exterior volume, towards the intermediate volume, allowing to pressurize the intermediate volume;
   - the fastening system comprises a swivel defining a first axial passage for each of the bolts,
   - the second flange defines a second axial passage for each of the bolts,
   - the bolts are adapted for pressing the swivel against the first flange, the first flange being axially sandwiched between the swivel and the second flange, and
   - when the fastening system is not tight, the second flange and the swivel are rotatably movable with respect to the first flange around the first axis;
the first flange comprises a tubular portion extending along the first axis and defining a first outer diameter comprised between 0.50 m and 15 m, preferably between 1.5 and 8 m;
the first flange comprises a tubular portion extending along the first axis and defining a first outer diameter, the first bearing surface radius divided by the first outer diameter defining a ratio comprised between:
   - 0.5 and 1.0, or
   - 1.0 and 20;
each of the bolts comprises a screw head and a nut, one of the head and the nut being closer to the second flange than the other one, wherein:
   - said one of the head and the nut defines a convex spherical surface in contact with a concave spherical surface defined by the second flange,
   - said one of the head and the nut defines a convex spherical surface in contact with a concave spherical surface defined by a washer of the bolts, the washer being axially sandwiched between the second flange and said one of the head and the nut,
   - a washer of the bolts defines a first convex spherical surface in contact with a concave spherical surface defined by another washer of the bolts, the washer and the other washer being axially sandwiched between the second flange and said one of the head and the nut, the washer being in contact with said one of the head and the nut,
      or
   - a washer of the bolts defines a convex spherical surface in contact with a concave spherical surface defined the second flange, the washer being axially sandwiched between the second flange and said one of the head and the nut;
each of the bolts comprises a screw head and a nut, one of the head and the nut being closer to the first flange or to a swivel of the fastening system adapted for pressing on the first flange, wherein:
   - said one of the head and the nut defines a convex spherical surface in contact with a concave spherical surface defined by the first flange or the swivel,
   - said one of the head and the nut defines a convex spherical surface in contact with a concave spherical surface defined by a washer of the bolts, the washer being axially sandwiched between the first flange or the swivel, and said one of the head and the nut,
   - a washer of the bolts defines a convex spherical surface in contact with a concave spherical surface defined by another washer of the bolts, the washer and the other washer being axially sandwiched between the first flange or the swivel, and said one of the head and the nut, the washer being in contact with said one of the head and the nut, or
   - a washer of the bolts defines a convex spherical surface in contact with a concave spherical surface defined the first flange or the swivel, the washer being axially sandwiched between the first flange or the swivel, and said one of the head and the nut;
   - the first flange, or a swivel of the fastening system adapted for pressing on the first flange, and/or
   - the second flange,
define an axial passage for each of the bolts, the axial passage;
   - being frustoconical and tapered axially away from the first bearing surface, or
   - having a plurality of successive cylindrical portions with decreasing internal diameters away from the first bearing surface;
   - a third hollow structural element mechanically attached to the first structural element, the first structural element and the third structural element being intended to form a first pre-assembled system,
   - a fourth hollow structural element mechanically attached to the second structural element, the second structural element and the fourth structural element being intended to form a second pre-assembled system, and
   - a second mechanical connection adapted for connecting the third structural element and the fourth structural element together,
the third structural element, the fourth structural element and the second connection defining a second interior volume, and the second connection being structurally analogous to said connection.

The invention proposes an assembly for producing electricity comprising:
- a platform as described above and
- a wind turbine adapted for being mechanically connected to the platform.

The invention also proposes a process of manufacturing a platform as described above or an assembly as described above, comprising :
- providing the first structural element, the second structural element, and the connection,
- fixing the first flange to the first structural element,
- fixing the second flange to the second structural element, and
- using the fastening system in order to fasten the second flange to the first flange, the plurality of bolts pressing the first bearing surface and the second bearing surface against each other, the second axis being aligned with the first axis, or offset with respect the first axis as a result of manufacturing and/or assembling tolerances, the sealing system extending between the first flange and the second flange and surrounding the first axis in order to seal the interior volume.

The invention and its advantages will be better understood upon reading the following description, given solely by way of example and with reference to the appended drawings, in which:
- Figure 1 is a diagram showing an assembly according to the invention, comprising a floating platform and a wind turbine,
- Figure 2 is a cross-sectional view of a mechanical connection between a first structural element and a second structural element of the platform shown in Figure 1, the first axis and the second axis defined by the connection being aligned,
- Figure 3 is a cross-sectional view of the connection shown in Figures 1 and 2, the first axis and the second axis of the connection defining a positive angle due to manufacturing or assembling tolerances,
- Figure 4 is a cross-sectional view of the connection shown in Figures 1 to 3, the first axis and the second axis defining a negative angle due to manufacturing or assembling tolerances,
- Figure 5 is a view analogous to Figure 2 showing a connection according to a first variant of the connection shown in Figures 1 to 4, the first axis and the second axis defined by the connection being aligned,
- Figure 6 is a view of a detail of Figure 5 showing the sealing system of the connection,
- Figure 7 is a cross-sectional view of the connection shown in Figure 5, the first axis and the second axis defining a positive angle due to manufacturing or assembling tolerances,
- Figure 8 is a view analogous to Figure 4, showing a connection according to a second variant of the connection shown in Figures 1 to 4, the first axis and the second axis defining a negative angle,
- Figure 9 is a view analogous to Figure 3, showing a connection according to a third variant of the connection shown in Figures 1 to 4, the first axis and the second axis defining a positive angle,
- Figure 10 is a view analogous to Figure 2, showing a connection according to a fourth variant of the connection shown in Figures 1 to 4, the first axis and the second axis being aligned, and

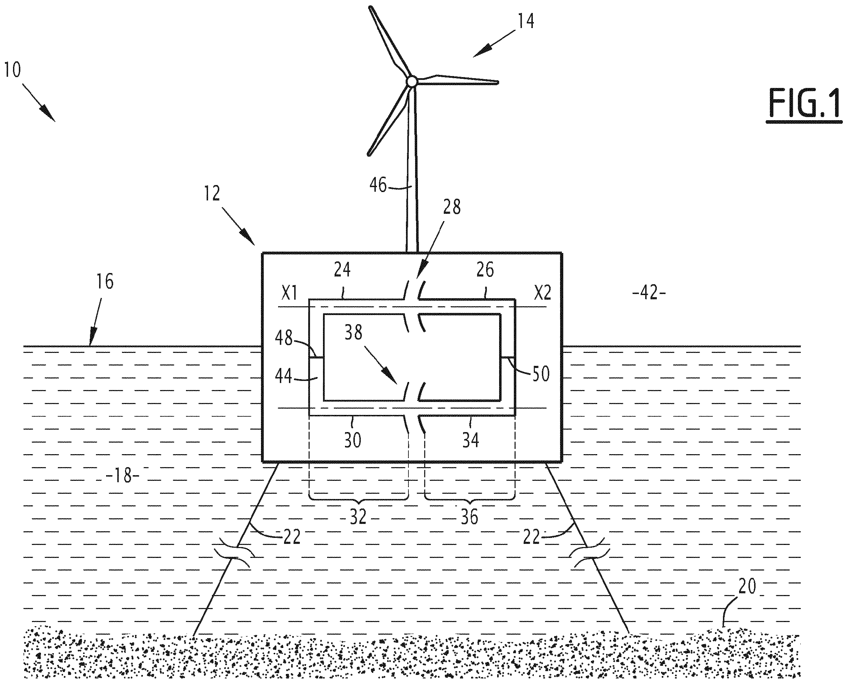

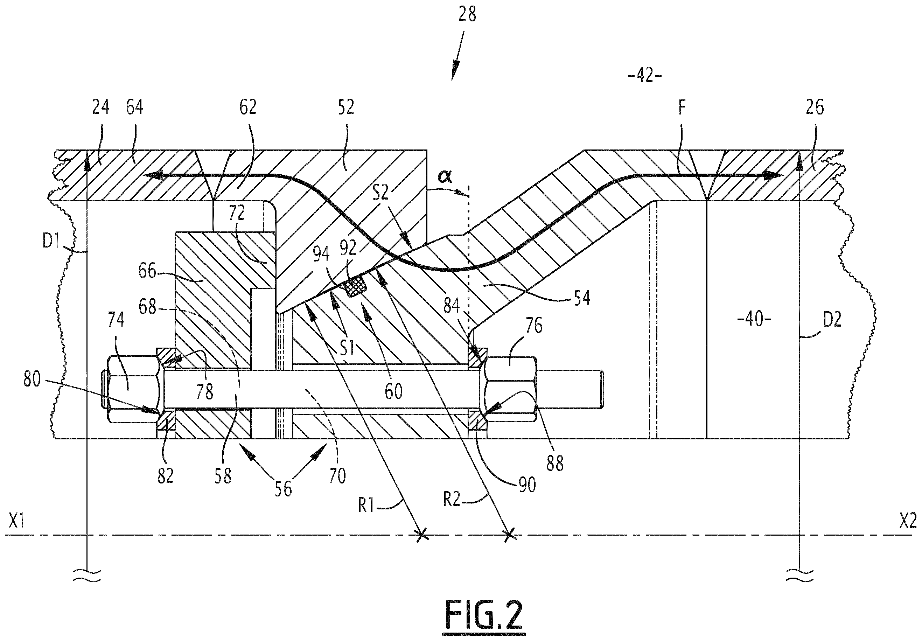

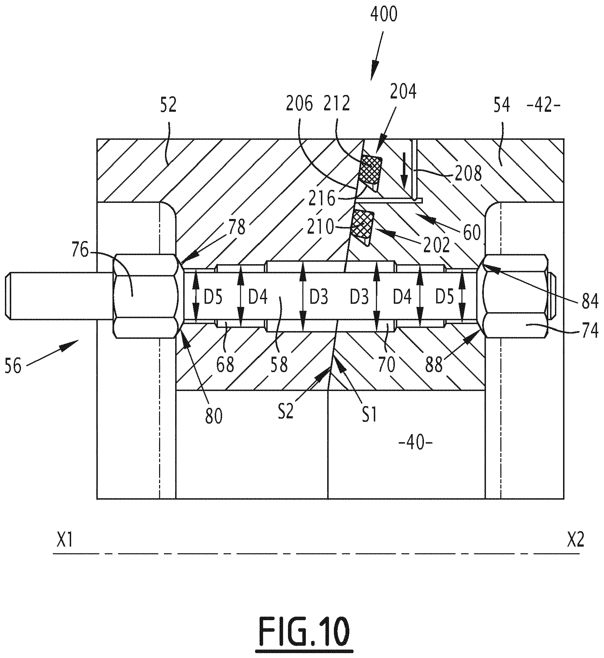

- Figure 10 is a view analogous to Figure 2, showing a connection according to a fifth variant of the connection shown in Figures 1 to 4, the first axis and the second axis being aligned.

### Assembly

With reference to Figure 1, an assembly 10 according to the invention will now be described.

The assembly 10 is adapted for producing electricity, as it comprises an offshore floating platform 12, and a wind turbine 14 adapted mechanically connected to the platform.

As a variant (not shown), the assembly 10 does not produce electricity and does not comprise a wind turbine. For example, the assembly 10 comprises a substation including a transformer or a converter, such as HV/DC or AC/DC, and/or comprises a gas storage or production unit, among other possibilities.

### Platform

The platform 12 for example floats on a surface 16 of a body of water 18 which can be an ocean, a sea or a lake. The platform 12 is for example attached to a seabed 20 by mooring systems 22.

As a variant (not shown), the platform 12 floats within the body of water 18 under the surface 16.

The platform 12 comprises a first hollow structural element 24, and a second hollow structural element 26, and a mechanical connection 28 adapted for connecting the first structural element and the second structural element together.

In the example, the platform 12 also comprises a third hollow structural element 30 mechanically attached to the first structural element 24, the first structural element and the third structural element forming a first pre-assembled system 32. The platform 12 for example comprises a fourth hollow structural element 34 mechanically attached to the second structural element 26, the second structural element and the fourth structural element forming a second pre-assembled system 36. The platform 12 for example comprises a second mechanical connection 38 adapted for connecting the third structural element 30 and the fourth structural element 34 together.

The first structural element 24, the second structural element 26 and the connection 28 define an interior volume 40 and an exterior volume 42.

The third structural element, the fourth structural element and the second connection for example define a second interior volume 44.

For example, the third structural element 30 and the fourth structural elements 34 are analogous to the first structural element 24 and the second structural element 26 and will not be described.

The second connection 38 is advantageously structurally analogous to the connection 28 and will not be described.

In a particular embodiment, the interior volume 40 and the second interior volume 42 are fluidly connected to each other. In other words, they form one single interior volume.

In a particular embodiment (not shown), the first structural element 24 is a mast 46 of the wind turbine 14. In other words, in that embodiment, the connection 28 is adapted for connecting the mast 46, forming a structural element, to another structural element of the platform 12.

In other embodiments, the first structural element 24 and the second structural element 26 for example are tubes or floats.

In a particular embodiment, the first structural element 24 and the second structural element 26 are connected to the third structural element 30 and the fourth structural element 34 by connections 48, 50 that are analogous to the connection 28.

### Connection

With reference to Figures 2 to 4, the connection 28 comprises a first flange 52 fixed to the first structural element 24 and defining a first axis X1 and a first bearing surface S1, and a second flange 54 fixed to the second structural element 26 and defining a second axis X2 and a second bearing surface S2.

The connection 28 comprises a fastening system 56 adapted for fastening the second flange 54 to the first flange 52, the fastening system comprising a plurality of bolts 58 adapted for pressing the first bearing surface S1 and the second bearing surface S2 against each other. Due to pressure and deformation, the first bearing surface S1 and the second bearing surface S2 are advantageously in surface contact with each other when the bolts 58 are tight.

The connection 28 comprises a sealing system 60 adapted for sealing the interior volume 40 with respect to the exterior volume 42, the sealing system extending between the first flange 52 and the second flange 54 and surrounding the first axis X1.

By "sealing", it is meant that the sealing system 60 is adapted for preventing fluids, such as air, nitrogen or water, from circulating from the interior volume 40 to the exterior volume 42, and vice versa, under normal operation conditions of the platform 12.

The connection 28 is advantageously adapted to transmit mechanical efforts F from the second structural element 26 to the first structural element 24 (or vice versa) for example larger than 2000 tons (about 20 million newtons).

The interior volume 40 is advantageously pressurized, for example by a ballast system (not shown) of the platform 12.

A typical pressure difference between the interior volume 40 and the exterior volume 42 is comprised between 0 and 20 bars.

The first bearing surface S1 is spherical and concave, the first bearing surface S1 defining a first bearing surface radius R1.

In the example, the second bearing surface S2 is spherical and convex, the second bearing surface S2 defining a second bearing surface radius R2 which is for example equal to the first bearing surface radius R1.

As a variant (not shown), the second bearing surface radius R2 is larger than the first bearing surface radius R1.

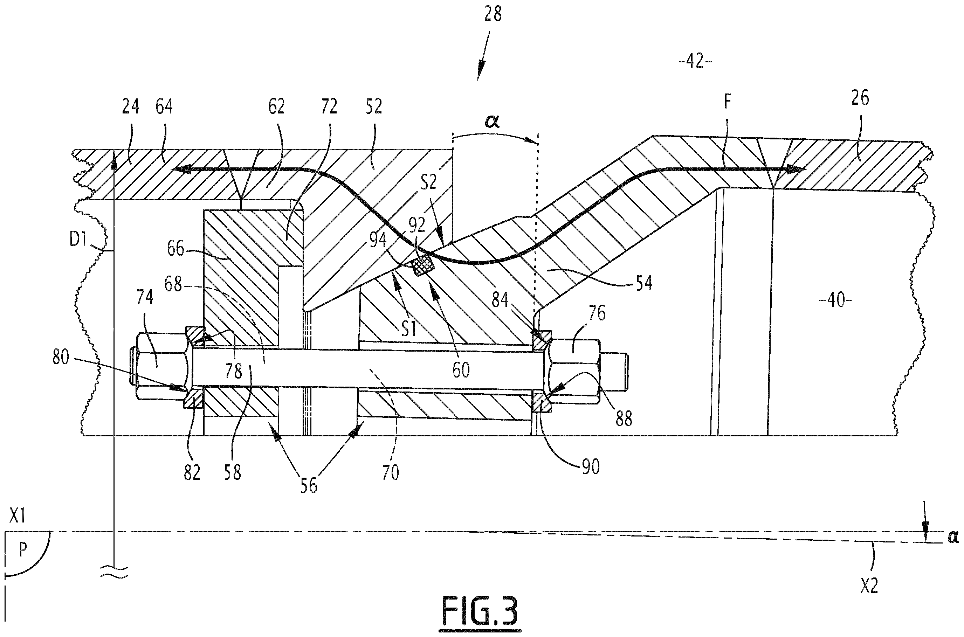

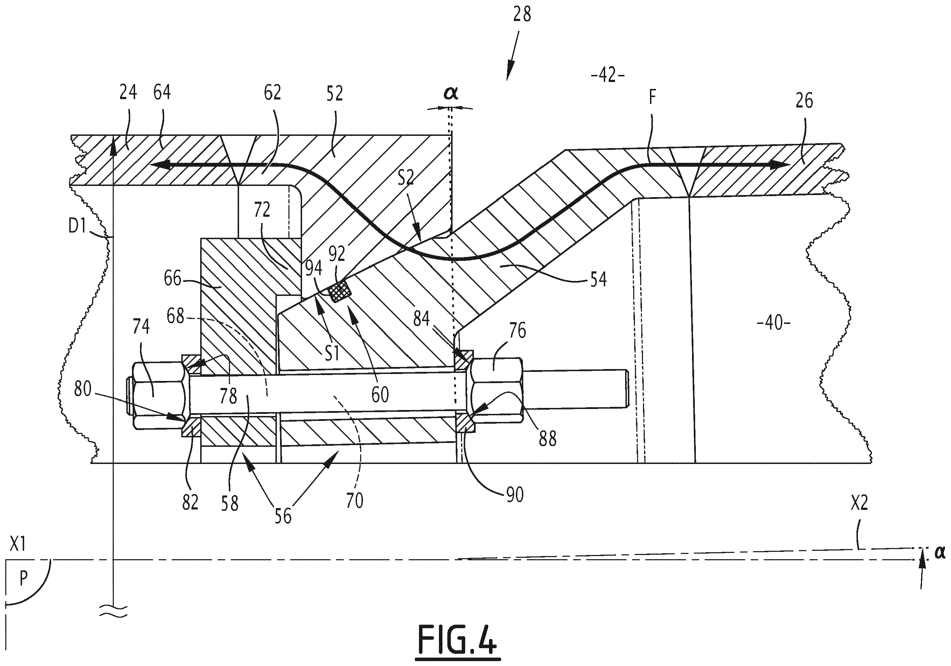

The second axis X2 is intended to be aligned with the first axis X1 (Figure 2), or offset with respect the first axis X1 (Figures 3 and 4) as a result of manufacturing and/or assembling tolerances. For example, the first axis X1 and the second axis X2 define a "positive" angle α between themselves (Figure 3) or a "negative" angle α (Figure 4) in a cross sectional plane P of Figures 3 and 4.

In other words, the connection 28 is movable (during its assembling) among an ideal configuration (Figure 2), in which the first axis X1 and the second axis X2 are aligned with each other, and a plurality of configurations (two of them being shown in Figures 3 and 4), in which the second axis X2 is or offset with respect the first axis X1.

The potential angle α results from a rotation of the second flange with respect to the first flange from the ideal configuration to one of the other above mentioned configurations. This rotation can advantageously be in any radial direction with respect to the first axis X1.

The angle α is 0° if the first axis X1 and the second axis X2 are aligned.

The angle α is for example comprised between -3.0° and +3.0°, preferably between -1.0° and +1.0°.

The angle α is for example +1.0° in Figure 3 and -1.0° in Figure 4.

The first flange 52 and the second flange 54 for example have an axisymmetric shape with respect to the first axis X1 and the second axis X2 respectively.

The first flange 52 is for example welded to the first structural element 24.

The first flange 52 for example comprises a tubular portion 62 extending along the first axis X1 and defining a first outer diameter D1 with respect to the first axis X1.

As a variant (not shown), the first flange 52 has no tubular portion, and the outer diameter D1 is for example defined by a tubular portion 64 of the first structural element 24.

The second flange 54 is for example welded to the second structural element 26, and defines a second outer diameter D2.

D1 is for example comprised between 0.50 m and 15 m, preferably between 1.5 and 8 m.

The first bearing surface radius R1 divided by the first outer diameter D1 defines a ratio advantageously comprised between 0.5 and 1.0 ("small ratio"). In this case, the first bearing surface S1 and the second bearing surface S2 are not very inclined with respect to the first axis X1.

In other variants described hereunder, the ratio may be comprised for example between 1.0 and 20 ("large ratio"). The first bearing surface S1 and the second bearing surface S2 are more inclined with respect to the first axis X1 in that case.

With a "small ratio", the second flange 54 axially protrudes from the second structural element 26 towards the first structural element 24, which helps positioning the first structural element and the second structural element with respect to each other during assembling. This also makes the welding of the first flange 52 and the second flange 54 to the first structural element 24 and the second structural element 26 easier than with a "large ratio". However, this requires more metal in the flanges, which are longer axially than with a "large ratio".

The first flange 52 and the second flange 54 are for example made of stainless steel.

In a particular embodiment, the first flange 52 and the second flange 54 comprise corrosion resistant coatings (not shown) known in themselves.

The coatings advantageously define the first bearing surface S1 and the second bearing surface S2.

### Fastening system

The fastening system 56 advantageously extends in the interior volume 40, which helps protecting the fastening system from corrosion or potential mechanical shocks.

As a variant (not shown), the fastening system 56 may extend in the exterior volume 42.

In this example, the fastening system 56 comprises a swivel 66 defining a first axial passage 68 for each of the bolts 58, the second flange 54 defining a second axial passage 70 for each of the bolts.

The bolts 58 are adapted for pressing the swivel 66 against the first flange 52, the first flange being axially sandwiched between the swivel and the second flange 54.

The swivel 66 advantageously has a ring shape and comprises a rim 72 pressing axially against the first flange 52 toward the second flange 54.

When the fastening system 56 is not tight, the second flange 54 and the swivel 66 are rotatably movable with respect to the first flange 52 around the first axis X1, which helps aligning each of the bolts 58 with the corresponding first passage or allows rotating the second structural element 26 with respect to the first structural element 24.

Each of the bolts 58 comprises a screw head 74 and a nut 76, the head being in the example closer to the first flange 52 or to the swivel 66 than the nut 76.

By "screw head", it is meant that the head 74 is not intended to move with respect to the screw. However, the head 74 may advantageously be formed by a nut. In that case, the bolt 58 may has two nuts, instead of one head 74 and one nut 76. A head or a nut are equivalent to each other in this respect.

The head 74 for example defines a convex spherical surface 78 in contact with a concave spherical surface 80 defined by a washer 82, the washer being axially sandwiched between the swivel 66 and the head 74. The washer 82 is in plane contact with the swivel 66.

The nut 76 defines a convex spherical surface 84 in contact with a concave spherical surface 88 defined by another washer 90, the other washer 90 being axially sandwiched between the second flange 54 and the nut 76. The other washer 90 is in plane contact with the second flange 54.

The first axial passage and the second axial passage are for example cylindrical.

Thanks to the above mentioned spherical surfaces 78, 80, 84, 88, at least some of the bolts 58 can be inclined with respect to the first axial passage 68 and with respect to the second axial passage 70 (Figures 3 and 4), the washers 82, 90 remaining in plane contact with the swivel 66 and the second flange 54 respectively. The spherical surfaces of the bolts 58 (including their washers if any) enable the screw to make an angle different from 90° with the surfaces of the first flange 52 and the second flange 54 on which the bolts press. This advantageously allows the fastening system 56 to adapt to the fact that second axis X2 is potentially offset with respect the first axis X1.

### Sealing system

The sealing system 60 is adapted for ensuring tightness of the interior volume 40 in any of the above mentioned configurations of the connection. This for example prevents sea water from entering the interior volume 40, and/or helps keeping the interior volume pressurized.

In the example, the sealing system 60 is in contact with the first bearing surface S1.

As a variant (not shown), the sealing system 60 is in contact with the second bearing surface S2.

The fact that at least the first bearing surface S1 is spherical allows the sealing element(s) to stay in contact with one of the first bearing surface S1 and the second bearing surface S2, even if the second axis X2 is offset with respect the first axis X1, i.e in any of the above mentioned configurations of the connection 28.

The sealing system 60 for example comprises an O-ring 92 extending in a groove 94 defined by the second flange 54, and pressed against the first bearing surface S1. Depending on the shape of the groove 94, the O-ring 92 is not necessarily in contact with the second bearing surface S2 in the example.

As a variant (not shown), the groove 94 is defined by the first flange 52.

According to another variant (not shown), the O-ring 92 is replaced by a flat seal. The shape of the groove 94 is adapted.

### Connection according to a first variant

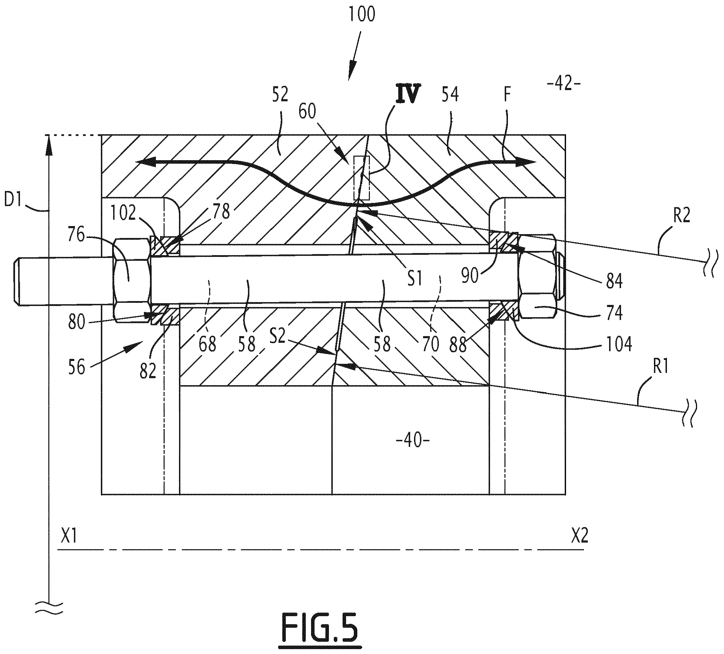

With reference to Figures 5 to 7, a connection 100 according to a first variant of the invention will now be described. The connection 100 is analogous to the connection 28 shown in Figures 1 to 4. Similar elements bear the same numeral references and will not be described again. Only the differences will be described hereafter.

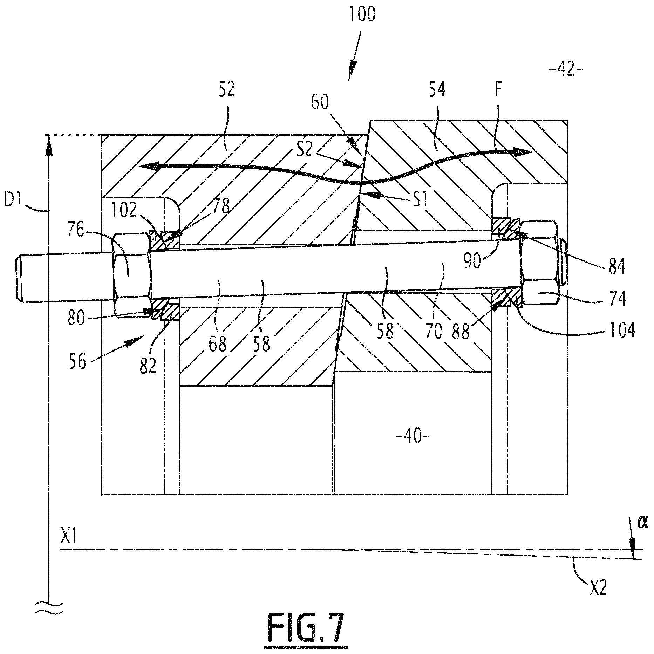

The second axis X2 is intended to be aligned with the first axis X1 (Figure 5), or offset with respect the first axis X1 (Figure 7).

The ratio defined by the first bearing surface radius R1 divided by the first outer diameter D1 is advantageously comprised between 1.0 and 20 ("large ratio"). The first bearing surface S1 and the second bearing surface S2 are more inclined with respect to the first axis X1 than in the connection.

As a variant (not shown), the second bearing surface S2 may be flat.

The fastening system 56 does not comprise the swivel 66, shown in figures 2 to 4. The first axial passage 68 for each of the bolts 58 is defined by the first flange 52. The bolts 58 are adapted for pressing the first flange 52 and the second flange 54 against each other axially.

In each of the bolts 58, the nut 74 is closer to the first flange 52 than the head 74.

In the fastening system 56, a washer 102 defines the convex spherical surface 78 in contact with the concave spherical surface 80 which is defined by the washer 82. The washer 82 and the washer 102 are axially sandwiched between the first flange 52 and the nut 76. The washer 102 is in plane contact with the nut 76. The washer 82 is in plane contact with the first flange 52.

A washer 104 defines the first convex spherical surface 84 in contact with the concave spherical surface 88 which is defined by the washer 90. The washer 90 and the washer 104 are axially sandwiched between the second flange 54 and the head 74. The washer 104 is in plane contact with the head 74. The washer 90 is in plane contact with the second flange 54.

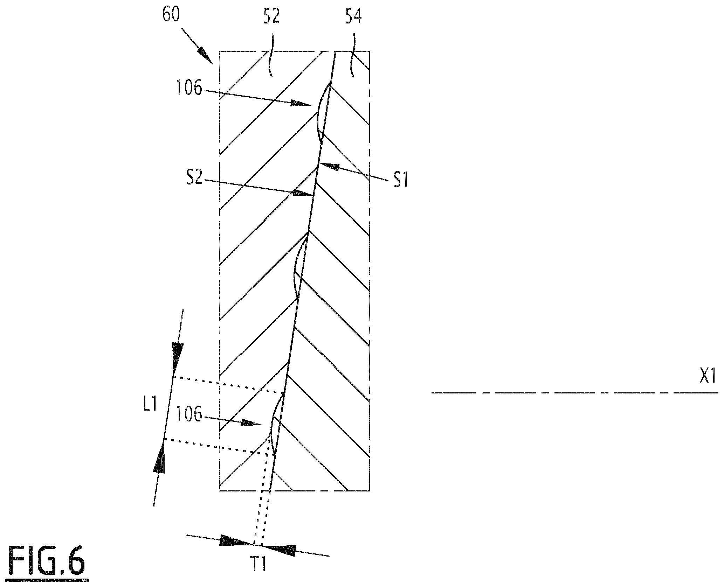

The sealing system 60 (Figure 6) comprises several gadroons 106 defined by the second flange 54, and protruding axially from the second bearing surface S2.

In a variant (not shown), the sealing system 60 comprises only one gadroon.

In another variant (not shown), the gadroons 106 are defined by the first flange 52, and protrude axially from the first bearing surface S1.

For example, the gadroons 106 have a length L1 comprised between 10 and 20 mm, and a thickness T1 comprised between 1.0 and 3.0 mm.

### Connection according to a second variant

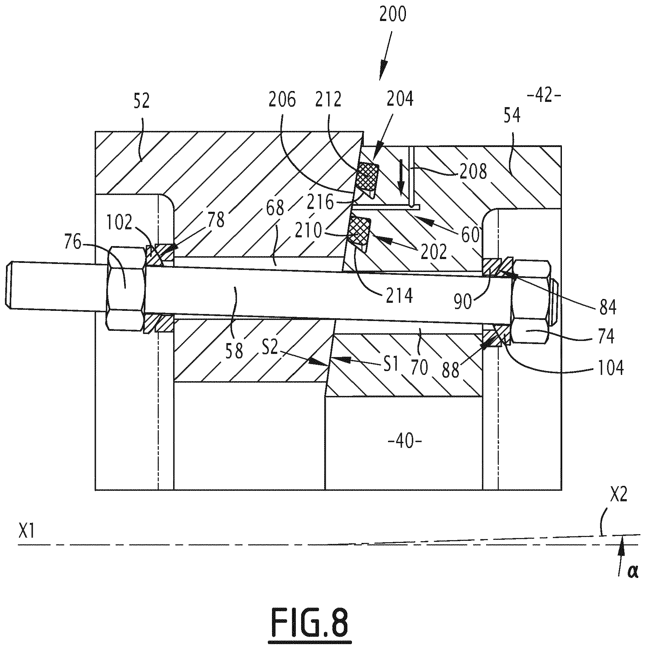

With reference to Figure 8, a connection 200 according to a second variant of the invention will now be described. The connection 200 is analogous to the connection 100 shown in Figures 5 to 7. Similar elements bear the same numeral references and will not be described again. Only the differences will be described hereafter.

The sealing system 60 comprises a first sealing member 202 and a second sealing member 204, both surrounding the first axis X1, the second sealing member 204 extending farther away from the first axis X1 than the first sealing member 202.

The first flange 52, the second flange 54, the first sealing member 202 and the second sealing member 204 define an intermediate volume 206.

The second flange 54 (or as a variant the first flange 52) defines a test port 208 from the exterior volume 42 towards the intermediate volume 206 allowing to pressurize the intermediate volume. This allows performing a leak test by pressurizing only the intermediate volume 206, instead of the whole interior volume 40.

As a variant (not shown), the test port 208 connects the intermediate volume 206 to the interior volume 40.

For example, the first sealing member 202 and the second sealing member 204 respectively comprise O-rings 210, 212 extending in grooves 214, 216 defined by the second flange 54 (or as a variant by the first flange 52).

### Connection according to a third variant

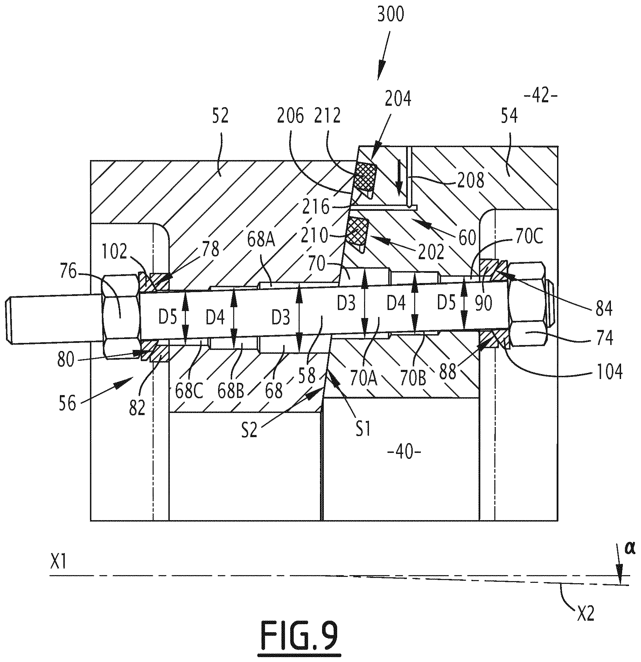

With reference to Figure 9, a connection 300 according to a third variant of the invention will now be described. The connection 300 is analogous to the connection 200 shown in Figure 8. Similar elements bear the same numeral references and will not be described again. Only the differences will be described hereafter.

Each of the first axial passage 68 and the second axial passage 70 has a plurality of successive cylindrical portions 68A, 68B, 68C, 70A, 70B, 70C with decreasing internal diameters D3, D4, D5 away from the first bearing surface S1. In the example, there are three cylindrical portions in each of the first axial passage 68 and the second axial passage 70.

D5 is smaller than D4 which is smaller than D3.

Such a shape of the first axial passage 68 and the second axial passage 70 allows a larger displacement D6 of the second flange 54 with respect to the first flange 52.

### Connection according to a fourth variant

With reference to Figure 10, a connection 400 according to a fourth variant of the invention will now be described. The connection 400 is analogous to the connection 300 shown in Figure 9. Similar elements bear the same numeral references and will not be described again. Only the differences will be described hereafter.

In each of the bolts 58, there are no washers.

The nut 76 (in this case closer to the first flange 52) defines the convex spherical surface 78 in contact with the concave spherical surface 80 which is defined by the first flange 52.

The head 74 (in this case closer to the second flange 54) defines the convex spherical surface 84 in contact with the concave spherical surface 88 which is defined by the second flange 54.

### Connection according to a fifth variant

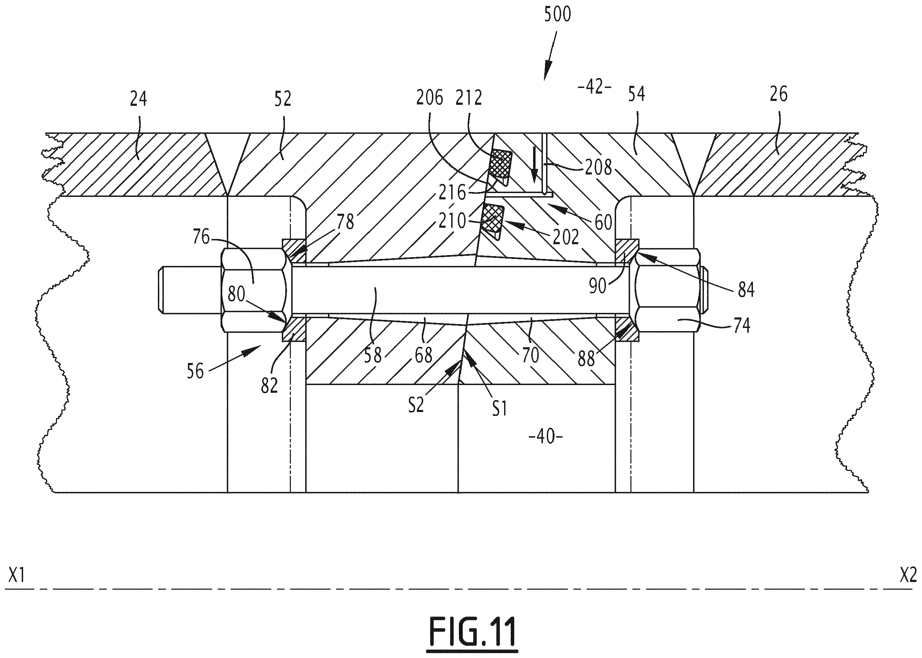

With reference to Figure 11, a connection 500 according to a fifth variant of the invention will now be described. The connection 500 is analogous to the connection 200 shown in Figure 8. Similar elements bear the same numeral references and will not be described again. Only the differences will be described hereafter.

Each of the first axial passage 68 and the second axial passage 70 is not cylindrical, but is frustoconical and tapered axially away from the first bearing surface S1. In other words, the first axial passage 68 and the second axial passage 70 get narrower starting from the first bearing surface S1.

Such a shape of the first axial passage 68 and the second axial passage 70 allows a larger displacement of the second flange 54 with respect to the first flange 52, hence a larger potential angle α between the first axis X1 and the second axis X2.

Each of the bolts 58 comprises only the two washers 82, 90 (like in the connection 28 represented in Figures 2 to 4).

The nut 76 (closer to the first flange 52 in this example) defines the convex spherical surface 78 in contact with the concave spherical surface 80 defined by the washer 82, the washer 82 being axially sandwiched between the first flange 52 and the nut 76. The washer 82 is in plane contact with the first flange 52.

The head 74 (closer to the second flange 52 in this example) defines the convex spherical surface 88 in contact with the concave spherical surface 88 defined by the washer 90.

As a variant (not shown), the washer 82 defines the convex spherical surface 78 in contact with the concave spherical surface 80 which is defined the first flange 52, the washer 82 being axially sandwiched between the first flange 52 and the nut 76. The washer 82 is in plane contact with the nut 76. The washer 90 defines the convex spherical surface 84 in contact with the concave spherical surface 88 defined the second flange 54, the washer 90 being axially sandwiched between the second flange 54 and the head 74. The washer 90 is in plane contact with the head 74 in that variant.

### Process of manufacturing the platform

A process of manufacturing the platform 12 will now be described.

The first structural element 24, the second structural element 26, and the connection 28 are provided. According to variants, the connections 100, 200, 300, 400 or 500 are provided instead of the connection 28.

In the example, the third structural element 30, the fourth structural element 34 and the second connection 38 are also provided.

The first flange 52 and the second flange 54 are fixed, advantageously welded, to the first structural element 24 and to the second structural element 26 respectively.

In the example, the first structural element 24 is also fixed to the third structural element 30, and the second structural element 26 is also fixed to the fourth structural element 34. The first structural element 24 and the third structural element 30, once assembled, form the first pre-assembled system 32. The second structural element 26 and the fourth structural element 34, once assembled, form the second pre-assembled system 36.

The fastening system 56 is used in order to fasten the second flange 54 to the first flange 52, the plurality of bolts 58 pressing the first bearing surface S1 and the second bearing surface S2 against each other in order to put them in surface contact. The second axis X2 is aligned with the first axis X1, or offset with respect the first axis X1 as a result of manufacturing and/or assembling tolerances. The sealing system 60 extends between the first flange 52 and the second flange 54 and surrounds the first axis X1 in order to seal the interior volume 40.

In the example, the same is performed, for example simultaneously, with the second connection 38 in order to connect the third structural element 30 and the fourth structural element 34 together and to seal the second interior volume 44 they form. By doing so, the first pre-assembled system 32 is connected to the second pre-assembled system 36, despite existing manufacturing tolerances in these pre-assembled systems, and allowing assembling tolerances between the pre-assembled systems 32, 36.

Thanks to the above described features, the first structural element 24 and the second structural element 26 of the platform 12 are assembled rapidly using the bolts 58. Due to the ability of the connections 28, 100, 200, 300, 400, 500 to cope with potential manufacturing or assembling tolerances, the sealing system 60 enables perfect tightness of the interior volume 40, even if the second axis X2 is somewhat offset with respect the first axis X1. This enables fast and tight assembling, which reduces the investment costs.

In the example, the connection 26 and the second connection 38 allow connecting the first pre-assembled system 32 and the second pre-assembled 36 together rapidly, despite potential manufacturing tolerances (internal to the pre-assembled systems 32, 36) and/or assembling tolerances, while guarantying perfect tightness of the interior volume 40 and the second interior volume 44.

## Claims

1. A floating offshore platform (12) comprising:
- a first hollow structural element (24), and a second hollow structural element (26), and
- a mechanical connection (28; 100; 200; 300; 400; 500) adapted for connecting the first structural element (24) and the second structural element (26) together,
the first structural element (24), the second structural element (26) and the connection (28; 100; 200; 300; 400; 500) defining an interior volume (40) and an exterior volume (42), and the connection (28; 100; 200; 300; 400; 500) comprising:
- a first flange (52) fixed to the first structural element (24) and defining a first axis (X1) and a first bearing surface (S1),
- a second flange (54) fixed to the second structural element (26) and defining a second axis (X2) and a second bearing surface (S2),
- a fastening system (56) adapted for fastening the second flange (54) to the first flange (52), the fastening system (56) comprising a plurality of bolts (58) adapted for pressing the first bearing surface (S1) and the second bearing surface (S2) against each other, the second axis (X2) being intended to be aligned with the first axis (X1), or offset with respect the first axis (X1) as a result of manufacturing and/or assembling tolerances, and
- a sealing system (60) adapted for sealing the interior volume (40), the sealing system (60) extending between the first flange (52) and the second flange (54) and surrounding the first axis (X1), the sealing system (60) being in contact with the first bearing surface (S1) or the second bearing surface (S2),
wherein the first bearing surface (S1) is spherical and concave, the first bearing surface (S1) defining a first bearing surface radius (R1).

2. The platform (12) according to claim 1, wherein the second bearing surface (S2) is spherical and convex, the second bearing surface (S2) defining a second bearing surface radius (R2) which is:
- equal to the first bearing surface radius (R1), or
- larger than the first bearing surface radius (R1).

3. The platform (12) according to claim 1 or 2, wherein the fastening system (56) extends in the interior volume (40).

4. The platform (12) according to any one of claims 1 to 3, wherein the sealing system (60) comprises:
- a flat seal extending in a groove defined by the first flange (52) or the second flange (54),
- one or a several gadroon(s) (106) defined by the first flange (52) or the second flange (54), and protruding axially from the first bearing surface (S1) or from the second bearing surface (S2), or
- one or several O-ring(s) (92) extending respectively in one or several groove(s) (94) defined by the first flange (52) or the second flange (54).

5. The platform (12) according to any one of claims 1 to 4, wherein:
- the sealing system (60) comprises a first sealing member (202) and a second sealing member (204), both surrounding the first axis (X1), the second sealing member (204) extending farther away from the first axis (X1) than the first sealing member (202),
- the first flange (52), the second flange (54), the first sealing member (202) and the second sealing member (204) define an intermediate volume (206), and
- the first flange (52) or the second flange (54) defines a test port (208) from the interior volume (40) or the exterior volume (42), towards the intermediate volume (206), allowing to pressurize the intermediate volume (206).

6. The platform (12) according to any one of claims 1 to 5, wherein:
- the fastening system (56) comprises a swivel (66) defining a first axial passage (68) for each of the bolts (58),
- the second flange (54) defines a second axial passage (70) for each of the bolts
- the bolts (58) are adapted for pressing the swivel (66) against the first flange (52), the first flange (52) being axially sandwiched between the swivel (66) and the second flange (54), and
- when the fastening system (56) is not tight, the second flange (54) and the swivel (66) are rotatably movable with respect to the first flange (52) around the first axis (X1).

7. The platform (12) according to any one of claims 1 to 6, wherein the first flange (52) comprises a tubular portion (62) extending along the first axis (X1) and defining a first outer diameter (D1) comprised between 0.50 m and 15 m, preferably between 1.5 and 8 m.

8. The platform (12) according to any one of claims 1 to 7, wherein the first flange (52) comprises a tubular portion (62) extending along the first axis (X1) and defining a first outer diameter (D1), the first bearing surface radius (R1) divided by the first outer diameter (D1) defining a ratio comprised between:
- 0.5 and 1.0, or
- 1.0 and 20.

9. The platform (12) according to any one of claims 1 to 8, wherein each of the bolts (58) comprises a screw head (74) and a nut (76), one of the head (74) and the nut (76) being closer to the second flange (54) than the other one, wherein:
- said one of the head (74) and the nut (76) defines a convex spherical surface (84) in contact with a concave spherical surface (88) defined by the second flange (54),
- said one of the head (74) and the nut (76) defines a convex spherical surface (84) in contact with a concave spherical surface (88) defined by a washer (90) of the bolts (58), the washer (90) being axially sandwiched between the second flange (54) and said one of the head (74) and the nut (76),
- a washer (104) of the bolts (58) defines a first convex spherical surface (84) in contact with a concave spherical surface (88) defined by another washer (90) of the bolts (58), the washer (104) and the other washer (90) being axially sandwiched between the second flange (54) and said one of the head (74) and the nut (76), the washer (104) being in contact with said one of the head (74) and the nut (76),
or
- a washer (104) of the bolts (58) defines a convex spherical surface (84) in contact with a concave spherical surface (88) defined the second flange (54), the washer (104) being axially sandwiched between the second flange (54) and said one of the head (74) and the nut (76).

10. The platform (12) according to any one of claims 1 to 9, wherein each of the bolts (58) comprises a screw head (74) and a nut (76), one of the head (74) and the nut (76) being closer to the first flange (52) or to a swivel (66) of the fastening system (56) adapted for pressing on the first flange (52), wherein:
- said one of the head (74) and the nut (76) defines a convex spherical surface (78) in contact with a concave spherical surface (80) defined by the first flange (52) or the swivel (66),
- said one of the head (74) and the nut (76) defines a convex spherical surface (78) in contact with a concave spherical surface (80) defined by a washer (82) of the bolts (58), the washer (82) being axially sandwiched between the first flange (52) or the swivel (66), and said one of the head (74) and the nut (76),
- a washer (102) of the bolts defines a convex spherical surface (78) in contact with a concave spherical surface (80) defined by another washer (82) of the bolts (58), the washer (102) and the other washer (82) being axially sandwiched between the first flange (52) or the swivel (66), and said one of the head (74) and the nut (76), the washer (102) being in contact with said one of the head (74) and the nut (76), or
- a washer (102) of the bolts (58) defines a convex spherical surface (78) in contact with a concave spherical surface (80) defined the first flange (52) or the swivel (66), the washer (102) being axially sandwiched between the first flange (52) or the swivel (66), and said one of the head (74) and the nut (76).

11. The platform (12) according to any one of claims 1 to 10, wherein:
- the first flange (52), or a swivel (66) of the fastening system (56) adapted for pressing on the first flange (52), and/or
- the second flange (54),
define an axial passage (68, 70) for each of the bolts (58), the axial passage (68, 70):
- being frustoconical and tapered axially away from the first bearing surface (S1), or
- having a plurality of successive cylindrical portions (68A, 68B, 68C, 70A, 70B, 70C) with decreasing internal diameters (D3, D4, D5) away from the first bearing surface (S1).

12. The platform (12) according to any one of claims 1 to 11, comprising:
- a third hollow structural element (30) mechanically attached to the first structural element (24), the first structural element (24) and the third structural element (30) being intended to form a first pre-assembled system (32),
- a fourth hollow structural element (34) mechanically attached to the second structural element (26), the second structural element (26) and the fourth structural element (34) being intended to form a second pre-assembled system (36), and
- a second mechanical connection (38) adapted for connecting the third structural element (30) and the fourth structural element (34) together,
the third structural element (30), the fourth structural element (34) and the second connection (38) defining a second interior volume (44), and the second connection (38) being structurally analogous to said connection (28).

13. An assembly (10) for producing electricity comprising:
- a platform (12) as described by any one of claims 1 to 12, and
- a wind turbine (14) adapted for being mechanically connected to the platform (12).

14. A process of manufacturing a platform (12) as described by any one of claims 1 to 12 or an assembly (10) as described by claim 13, comprising:
- providing the first structural element (24), the second structural element (26), and the connection (28),
- fixing the first flange (52) to the first structural element (24),
- fixing the second flange (54) to the second structural element (26), and
- using the fastening system (56) in order to fasten the second flange (54) to the first flange (52), the plurality of bolts (58) pressing the first bearing surface (S1) and the second bearing surface (S2) against each other, the second axis (X2) being aligned with the first axis (X1), or offset with respect the first axis (X1) as a result of manufacturing and/or assembling tolerances, the sealing system (60) extending between the first flange (52) and the second flange (54) and surrounding the first axis (X1) in order to seal the interior volume (40).
